# EUROPEAN PATENT SPECIFICATION

(11) **EP 4 570 719 B1**
(45) Date of publication and mention of the grant of the patent: **04.02.2026**
(21) Application number: 24217739.2
(22) Date of filing: 05.12.2024
(51) Int. Cl.: B65H 1/04, B65H 1/14, G03G 15/00, H04N 1/00

(54) **DOCUMENT CONVEYING DEVICE, IMAGE READING DEVICE AND IMAGE FORMING APPARATUS**
DOKUMENTENFÖRDERVORRICHTUNG, BILDLESEVORRICHTUNG UND BILDERZEUGUNGSVORRICHTUNG
DISPOSITIF DE TRANSPORT DE DOCUMENTS, DISPOSITIF DE LECTURE D'IMAGE ET APPAREIL DE FORMATION D'IMAGE

(30) Priority: 11.12.2023 JP 2023208176
(43) Date of publication of application: 18.06.2025
(73) Proprietor: KYOCERA Document Solutions Inc., Osaka-shi, Osaka, 540-8585 (JP)
(72) Inventor: NAKAGAWA, Takafumi, Osaka-shi, Osaka, 540-8585 (JP); TOKORO, Yoshitaka, Osaka-shi, Osaka, 540-8585 (JP); OGAWA, Shikitaro, Osaka-shi, Osaka, 540-8585 (JP); ISODA, Ren, Osaka-shi, Osaka, 540-8585 (JP)
(74) Representative: Kurig, Thomas

(56) References cited:
- JP-A- 2019 176 370
- US-A1- 2016 309 048
- US-A1- 2022 185 606
- US-B2- 8 792 146

## Description

### BACKGROUND

The present disclosure relates to a document conveying device, an image reading device and an image forming apparatus.

JP2004-357370 discloses a sheet conveying device for conveying a sheet (a document) stacked on a feeding tray toward a discharge tray disposed below the feeding tray. The sheet conveying device is turned around a rotational axis with respect to an optical reading part. An electric cable connecting the sheet conveying device and the optical reading part is supported by two fixing portions parallel to the rotational axis, and the electric cable between the two fixing portions forms a curved portion. A twist of the electric cable caused by opening and closing the sheet conveying device is absorbed by the curved portion and the two fixing portions, and a stress on the electric cable is reduced. JP 2019 176370 A discloses a document conveying device according to the preamble of claim 1.

Incidentally, in the sheet conveying device, the feeding tray may be provided with a sensor for detecting a presence or absence of the sheet or a size of the sheet, and a frame which supports the feeding tray may be provided with an electric board connected to the sensor via a cable. Further, in the sheet conveying device, in order to increase a number of sheets that can be stacked on the feeding tray or the discharge tray, the feeding tray may be supported by the support frame so as to be lifted and lowered. In the above-described technique, the stress acting on the cable when the feeding tray is lifted and lowered cannot be reduced.

### SUMMARY

A document conveying device according to the present disclosure conveys a document placed on a feeding tray to a discharge tray disposed below the feeding tray. The document conveying device includes a support frame, a cable, and a cable treatment member. The support frame supports the feeding tray to be liftable and lowerable. The cable connects a first connecting portion provided in the feeding tray and a second connecting portion provided in the frame. The cable treatment member is provided so as to be hanged from the feeding tray and houses an intermediate portion of the cable in a bent state. The intermediate portion of the cable is kept in the bent state inside the cable treatment member when the feeding tray is lifted and lowered. The cable treatment member has a curved surface portion curved so as to expand downward along the bend of the cable.

An image reading device of the present disclosure includes the document conveying device and a reading part which reads an image of the document conveyed by the document conveying device.

An image forming apparatus of the present disclosure includes the image reading device.

### BRIEF DESCRIPTION OF THE DRAWINGS

FIG. 1 is a schematic view (a front view) showing an internal structure of an image forming apparatus according to one embodiment of the present disclosure.
FIG. 2 is a cross-sectional view showing a document conveying device according to the embodiment of the present disclosure.
FIG. 3 is a plan view showing a feeding tray of the document conveying device according to the embodiment of the present disclosure.
FIG. 4 is a rear view showing a part of the feeding tray arranged at an upper limit position, in the document conveying device according to the embodiment of the present disclosure.
FIG. 5 is a rear view showing a part of the feeding tray arranged at a lower limit position, in the document conveying device according to the embodiment of the present disclosure.
FIG. 6 is a perspective view showing a cable treatment member (the front side) of the document conveying device according to the embodiment of the present disclosure.
FIG. 7 is a perspective view showing the cable treatment member (the rear side) of the document conveying device according to the embodiment of the present disclosure.
FIG. 8 is a rear view showing the cable treatment member of the document conveying device according to the embodiment of the present disclosure.

### DETAILED DESCRIPTION

Hereinafter, with reference to the attached drawings, an embodiment of the present disclosure will be described. In the drawings, L, R, U, and D indicate the left, right, upper, and lower, and the front side of the drawing shows the front side. Terms used in the specification to indicate directions and positions are used for convenience of explanation, and are not intended to limit the scope of the present disclosure.

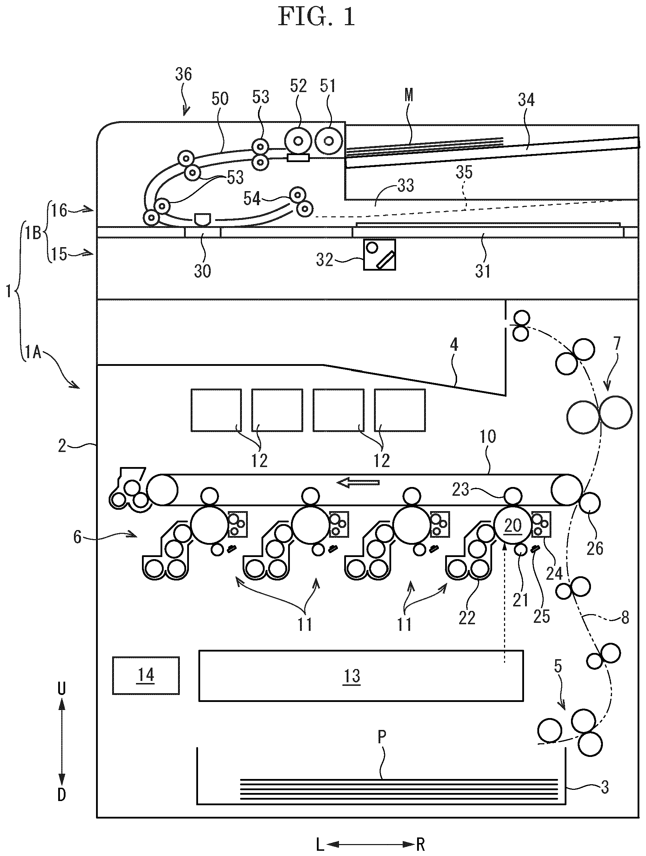

[Image Forming Apparatus] With reference to FIG. 1, an image forming apparatus 1 will be described. FIG. 1 is a schematic view (a front view) showing an internal structure of the image forming apparatus 1.

The image forming apparatus 1 includes an image forming device 1A which forms an image on a sheet P by an electrophotographic method, and an image reading device 1B which optically reads an image of a document M and changed the image to digital data. The image forming device 1A and the image reading device 1B are appropriately controlled by a control part 14.

[Image Forming Device] In the lower portion of a device main body 2 of the image forming device 1A, a sheet feeding cassette 3 which stores a bundle of paper sheets P is detachably attached. On the upper surface of the device main body 2, a sheet discharge tray 4 on which the sheet P on which an image is formed is received is provided. A conveyance path 8 along which the sheet P is conveyed from the sheet feeding cassette 3 to the discharge tray 4 is provided in the device main body 2. In the device main body 2, a sheet feeding part 5, an image forming part 6 and a fixing part 7 are provided. The sheet feeding part 5 is provided in the upstream portion of the conveyance path 8, and the fixing part 7 is provided in the downstream portion of the conveyance path 8. The image forming part 6 is provided between the sheet feeding part 5 and the fixing part 7. The sheet P is not limited to a paper sheet, and may be a resin film or the like.

The image forming part 6 includes an intermediate transfer belt 10, four image forming units 11, four toner containers 12, and an exposure unit 13. The four image forming units 11 are arranged side by side in the left-and-right direction below the intermediate transfer belt 10. The four toner containers 12 are provided above the intermediate transfer belt 10, and contain toner (developer) of four colors (yellow, magenta, cyan, and black) for replenishment. The exposure unit 13 is provided below each image forming unit 11. Since the four image forming units 11 have the same configuration, one image forming unit 11 will be described below.

The image forming unit 11 includes a photosensitive drum 20, a charging device 21, a developing device 22, a primary transfer roller 23, a cleaning device 24, and a static eliminator 25. The photosensitive drum 20 is rotationally driven while being in contact with the intermediate transfer belt 10. The charging device 21, the developing device 22, the primary transfer roller 23, the cleaning device 24, and the static eliminator 25 are arranged around the photosensitive drum 20 in the order of the image forming process. The primary transfer roller 23 faces the photosensitive drum 20 via the intermediate transfer belt 10. A secondary transfer roller 26 is in contact with the right side portion of the intermediate transfer belt 10.

[Image Forming Process] The operation of the image forming device 1A will be described. The image forming device 1A forms an image on the sheet P based on image data transmitted from an external terminal (a personal computer or the like). The control part 14 controls the image forming device 1A based on the input image data, and the image forming process is executed as follows.

The charging device 21 charges the surface of the photosensitive drum 20. The exposure unit 13 performs exposure corresponding to the image data to the photosensitive drum 20 to form an electrostatic latent image on the surface of the photosensitive drum 20. The developing device 22 develops the electrostatic latent image on the photosensitive drum 20 into a toner image by using the toner supplied from the toner container 12. The toner images of the four colors carried on the four photosensitive drums 20 are sequentially primarily transferred to the intermediate transfer belt 10 by the primary transfer rollers 23 to which a primary transfer bias is applied. Thus, a full-color toner image is formed on the surface of the intermediate transfer belt 10.

The sheet P is fed from the sheet feeding cassette 3 to the conveyance path 8 by the sheet feeding part 5, and the toner image carried on the intermediate transfer belt 10 is secondarily transferred to the sheet P by the secondary transfer roller 26 to which a secondary transfer bias is applied. The toner image is thermally fixed to the sheet P by the fixing part 7, and then the sheet P is discharged to the discharge tray 4. The cleaning device 24 removes the toner remaining on the surface of the photosensitive drum 20, and the static eliminator 25 removes the charge of the photosensitive drum 20.

[Image Reading Device] As shown in FIG. 1, the image reading device 1B includes a reading part 15 and a document conveying device 16. The reading part 15 reads an image on the document M conveyed by the document conveying device 16. The document conveying device 16 is arranged on the reading part 15, and conveys the document M stacked on a sheet feeding tray 34 toward a discharge tray 35 arranged below the sheet feeding tray 34.

<Reading Part> The reading part 15 includes a contact glass 30, a platen glass 31, and an optical reading unit 32. The contact glass 30 is provided on the upper left portion of a housing of the reading part 15, and the platen glass 31 is provided on the right side of the contact glass 30. The optical reading unit 32 stops at a position facing the contact glass 30 and optically reads the document M (image) conveyed on the contact glass 30 by the document conveying device 16. The optical reading unit 32 optically reads the document M (image) on the platen glass 31 while moving rightward from a position facing the contact glass 30.

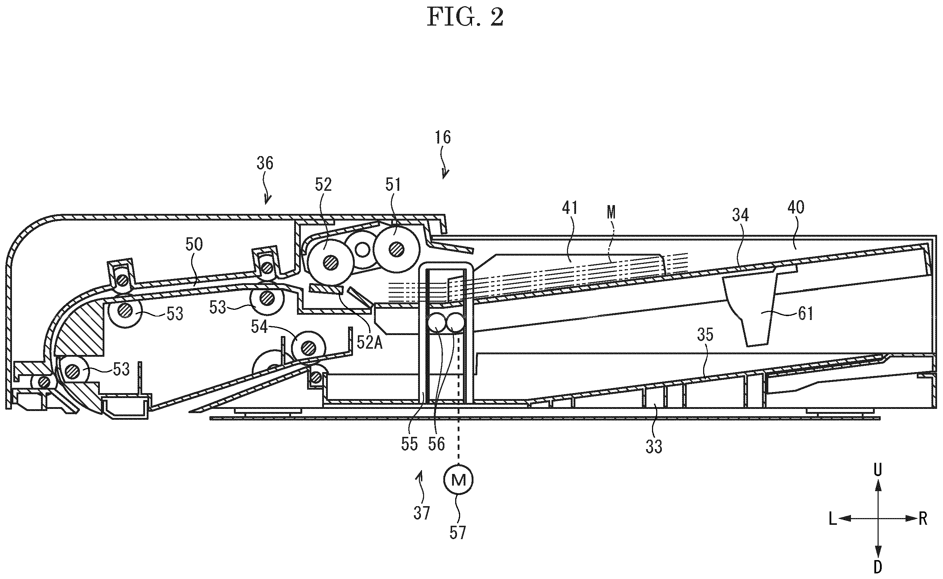

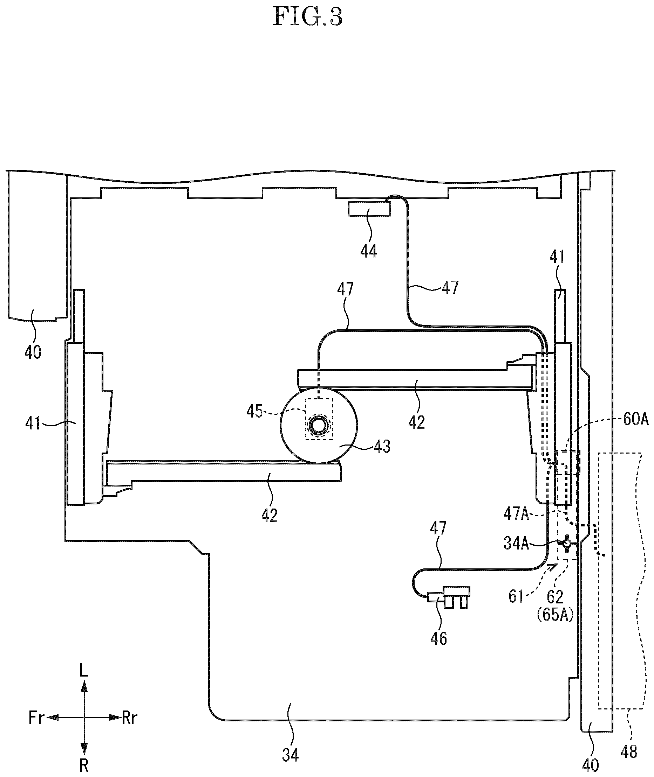

<Document Conveying Device> Next, with reference to FIG. 1 to FIG. 3, the document conveying device 16 will be described. FIG. 2 is a sectional view showing the document conveying device 16. FIG. 3 is a plan view showing the sheet feeding tray 34.

As shown in FIG. 1 and FIG. 2, the document conveying device 16 includes a document pressing part 33, a sheet feeding tray 34, a discharge tray 35, a conveying part 36, and a lifting part 37. The sheet feeding tray 34 and the discharge tray 35 are provided on the right side of the document pressing part 33, and the conveying part 36 is provided on the left side of the document pressing part 33. In the following description, the "upstream" and "downstream" refer to the upstream and downstream in the conveyance direction of the document M.

(Document Pressing Part) As shown in FIG. 1, the document pressing part 33 is formed so as to cover the glasses 30, 31 of the reading part 15, and is rotatably (openably/closably) attached to the upper rear surface of the device main body 2 via a hinge (not shown). When the front side portion of the document pressing part 33 is lifted (opened), the contact glass 30 and the platen glass 31 are exposed.

(Sheet Feeding Tray) As shown in FIG. 2, the sheet feeding tray 34 extends obliquely upward and rightward from the conveying part 36. The documents M (bundles of the documents M) are stacked on the sheet feeding tray 34. The sheet feeding tray 34 is supported by a support frame 40 so as to be liftable and lowerable. The support frame 40 is formed by a pair of sheet metals which are stood at both front and rear ends of the document pressing part 33 and covered with a resin sheath. The front support frame 40 is provided on the left half of the document pressing part 33, and the rear support frame 40 is provided over the entire document pressing part 33 in the left-and-right direction.

(Cursor) The sheet feeding tray 34 is provided with a pair of cursors 41 for aligning both ends of the stacked documents M in the front-and-rear direction (width direction). As shown in FIG. 3, the pair of cursors 41 are disposed on both sides of the sheet feeding tray 34 in the front-and-rear direction. A pair of rack gears 42 extending toward the center in the front-and-rear direction are connected to the lower portions of the cursors 41. The rack gears 42 are engaged with a cursor gear 43 rotatably supported substantially at the center of the sheet feeding tray 34 in the front-and-rear direction from the left and right sides. The cursors 41 is closer to and away from each other while rotating the cursor gear 43 through the rack gears 42. By moving the cursors 41 so as to abut against both the front and rear ends of the document M, the centers of the document M and the sheet feeding tray 34 in the front-and-rear direction are substantially aligned.

(Sensors, and the others) As shown in FIG. 3, the sheet feeding tray 34 is provided with a document detection sensor 44, a document size detection sensor 45, and a document length detection sensor 46. The document detection sensor 44 is a reflective optical sensor provided on the downstream portion (left portion) of the sheet feeding tray 34, and detects the document M on the sheet feeding tray 34. The document size detection sensor 45 is a volume sensor including a rotational shaft of the cursor gear 43, and detects a size (width) of the document M from an electric resistance value changed according to a position of the pair of cursors 41. The document length detection sensor 46 is a transmissive optical sensor provided on the upstream portion (right portion) of the sheet feeding tray 34, and detects that the document M placed on the sheet feeding tray 34 is large in size (for example, B4 size or larger). More precisely, an actuator (not shown) that is pushed down when a large-sized document M is placed is provided on the right portion of the sheet feeding tray 34, and the document length detection sensor 46 detects the pushed down actuator.

Each of these sensors 44 to 46 is electrically connected to an electric board 48 via a cable 47. The cable 47 is a flexible cord formed by covering an electric wire with an insulator. The three cables 47 extend from the three sensors 44 to 46 to the rear side of the sheet feeding tray 34 and are bundled together at the rear side of the sheet feeding tray 34. The electric board 48 is provided on the rear support frame 40, and electrically connected to the control part 14. The outputs (electric signals) of the three sensors 44 to 46 are transmitted to the electric board 48 through the cables 47, and are transmitted from the electric board 48 to the control part 14. The control part 14 determines the presence or absence of the document M on the sheet feeding tray 34 based on the output of the document detection sensor 44, determines a size of the document M on the sheet feeding tray 34 based on the output of the document size detection sensor 45, and determines whether the document M on the sheet feeding tray 34 is large or not, based on the output of the document length detection sensor 46.

An example of the "first connecting portion" is the document detection sensor 44, the document size detection sensor 45, and the document length detection sensor 46. Further, an example of the "first connecting portion" need not be the three sensors 44 to 46, but may be at least one of the three sensors 44 to 46. The three sensors 44 to 46 are not limited to an optical sensor or a volume sensor, but may be a camera or a microswitch. An example of the "second connecting portion" is the electric board 48, but it is not limited thereto, and may be the control part 14. Further, both of the first connecting portion and the second connecting portion may be an electric circuit board, or the first connecting portion may be a power supply unit for supplying power to the electric circuit board (second connecting portion) (not shown). That is, the first connecting portion and the second connecting portion may be any one that can be electrically connected by the cable 47. Further, in the present specification, the three bundled cables 47 are treated as one, and are simply referred to as the cable 47.

(Discharge Tray) As shown in FIG. 2, the discharge tray 35 is disposed below the sheet feeding tray 34 and above the document pressing part 33. More specifically, the upper surface of the document pressing part 33 disposed on the platen glass 31 is configured as the discharge tray 35 (see also FIG. 1). The discharge tray 35 receives the document M conveyed to the conveying part 36 and then discharged. The discharge tray 35 is provided with a discharge sensor (for example, an optical sensor) for detecting the document M stacked thereon (not shown). The discharge sensor is electrically connected to the electric board 48 (or the control part 14) via another cable (not shown) .

(Conveying Part) As shown in FIG. 1, the conveying part 36 is provided on the left side of the document pressing part 33. Inside the conveying part 36, a substantially U-shaped document conveyance path 50 is formed so as to connect the sheet feeding tray 34 to the discharge tray 35. The conveying part 36 feeds the document M on the sheet feeding tray 34 to the document conveyance path 50 one by one, and discharges the document M passed through the document conveyance path 50 to the discharge tray 35.

As shown in FIG. 1 and FIG. 2, inside the conveying part 36, a pickup roller 51, a separation roller 52, a plurality of conveying rollers pairs 53, and a discharge rollers pair 54 are provided. The pickup roller 51 is arranged above the upstream end of the document conveyance path 50, and the separation roller 52 is arranged on the downstream side of the pickup roller 51. The pickup roller 51 and the separation roller 52 are rotatably supported by the support frame 40. The pickup roller 51 is driven to be rotated after being in contact with the document M on the sheet feeding tray 34, and feeds the document M to the document conveyance path 50. The separation roller 52 conveys the document M while holding it between the separation roller 52 and a separation plate 52A. The conveying rollers pairs 53 are provided on the downstream side of the separation roller 52 at intervals, and the discharge rollers pair 54 is provided at the downstream end of the document conveyance path 50. The conveying rollers pairs 53 and the discharge rollers pair 54 are rotatably supported by the support frame 40. In the conveying rollers pairs 53 and the discharge rollers pair 54, one roller is driven to be rotated and the other roller is driven to be rotated.

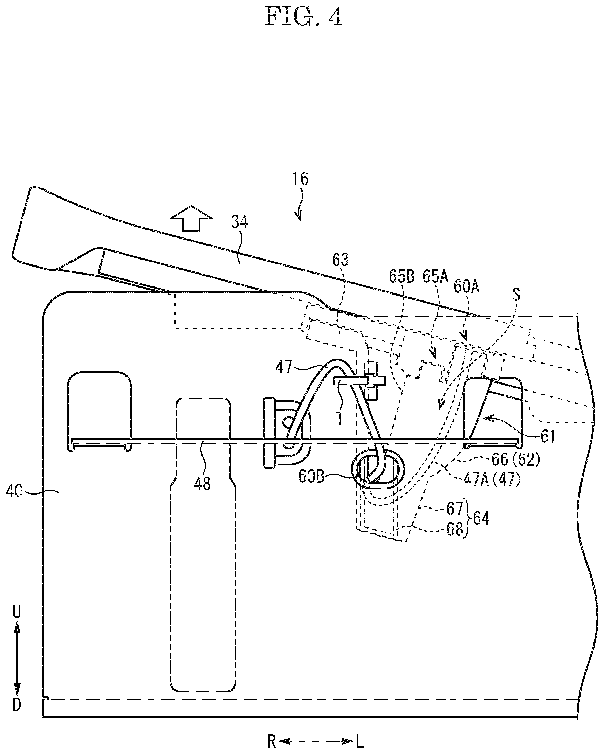

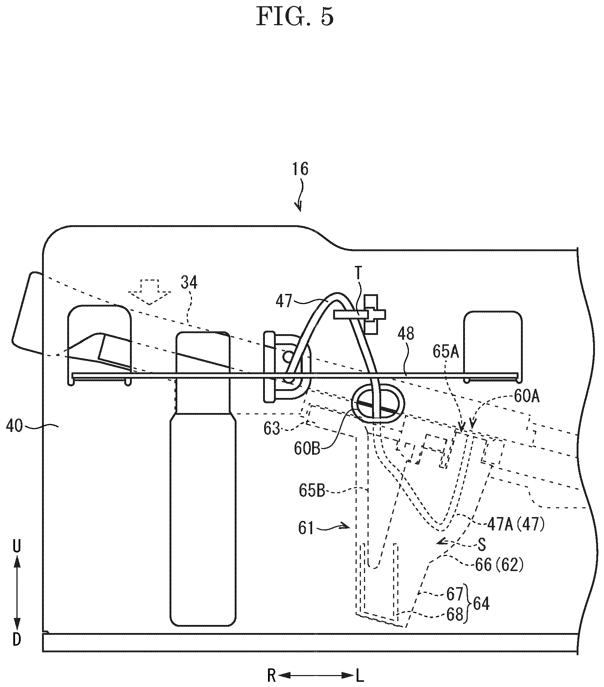

(Lifting Part) The lifting part 37 lifts and lowers the sheet feeding tray 34 in accordance with a thickness (height, number of the sheets) of the bundle of documents M stacked on the sheet feeding tray 34. By lowering the sheet feeding tray 34 downward (see FIG. 5 described later), the lifting part 37 makes it possible to stack a large number of the documents M on the sheet feeding tray 34. On the other hand, by lifting the sheet feeding tray 34 (see FIG. 4, described later), the lifting part 37 makes it possible to discharge a large number of the documents M to the discharge tray 35, and makes it easy to take out the documents M discharged to the discharge tray 35.

As shown in FIG. 2, the lifting part 37 includes a pair of lifting racks 55, two pairs of lifting pinions 56, and a lifting motor 57. Since the pair of lifting racks 55 and the two pairs of lifting pinions 56 are symmetrical in the front-and-rear direction with respect to the sheet feeding tray 34, the specification will focus on one (for example, the front side).

The lifting rack 55 is formed in a substantially inverted U-shape having internal teeth, and is fixed to the support frame 40. The pair of lifting pinions 56 are arranged side by side in the left-and-right direction, are rotatably supported on the sheet feeding tray 34 around an axis, and are engaged with the internal teeth of the lifting rack 55. Either one of the lifting pinions 56 is connected to the lifting motor 57 via a power transmission mechanism such as a gear train. The lifting motor 57 is electrically connected to the control part 14 via a drive circuit (not shown). The lifting motor 57 rotates the lifting pinion 56 forward and backward, so that the right and left lifting pinions 56 are moved in the upper-and-lower direction while engaging with the lifting rack 55. The sheet feeding tray 34 also lifts and lowers integrally with the right and left lifting pinions 56. The lifting part 37 is provided with a lifting regulation sensor (for example, an optical sensor) for detecting an upper limit position and a lower limit position of the sheet feeding tray 34 in accordance with a height of the stacked documents M and for preventing excessive lifting of the sheet feeding tray 34 (not shown). The lifting regulation sensor is electrically connected to the electric board 48 (or the control part 14) via another cable (not shown).

[Image Reading Process] With reference to FIG. 1 and FIG. 2, the operation of the image reading device 1B will be described. The document M to be set on the sheet feeding tray 34 is formed in a sheet shape of a single sheet. On the other hand, the document M stacked on the platen glass 31 is not limited to be a sheet shape but may be a booklet, a card, or the like.

First, when the user sets the document M on the sheet feeding tray 34 with the document pressing part 33 closed and inputs a reading instruction, the control part 14 controls the image reading device 1B, and the image reading process is executed as follows. The pickup roller 51 feeds the document M set on the sheet feeding tray 34 to the document conveyance path 50, and the separation roller 52 feeds the document M one by one downstream. The document M is conveyed on the contact glass 30 by each conveying rollers pair 53. The optical reading unit 32 reads an image of the document M passing over the contact glass 30. The discharge rollers pair 54 sends the document M passed through the contact glass 30 to the discharge tray 35.

Next, when the user opens the document pressing part 33, sets the document M on the platen glass 31, and inputs a reading instruction, the control part 14 controls the image reading device 1B, and the image reading process is executed as follows. The optical reading unit 32 reads an image of the document M on the platen glass 31 while moving rightward.

The image data of the document M thus read is stored in the storage part of the control part 14, and the control part 14 executes the image forming process described above or stores the image data in an external terminal.

In a configuration in which various sensors 44 to 46 provided in the sheet feeding tray 34 and the electric board 48 fixed to the support frame 40 are connected by the cable 47, when the sheet feeding tray 34 is lifted and lowered, a stress such as twisting and breaking occurs in the cable 47. Such stress on the cable 47 causes disconnection or the like. Therefore, the document conveying device 16 according to the present embodiment is provided with a cable treatment member 61 in order to reduce the stress applied to the cable 47 accompanying the lifting and lowering of the sheet feeding tray 34.

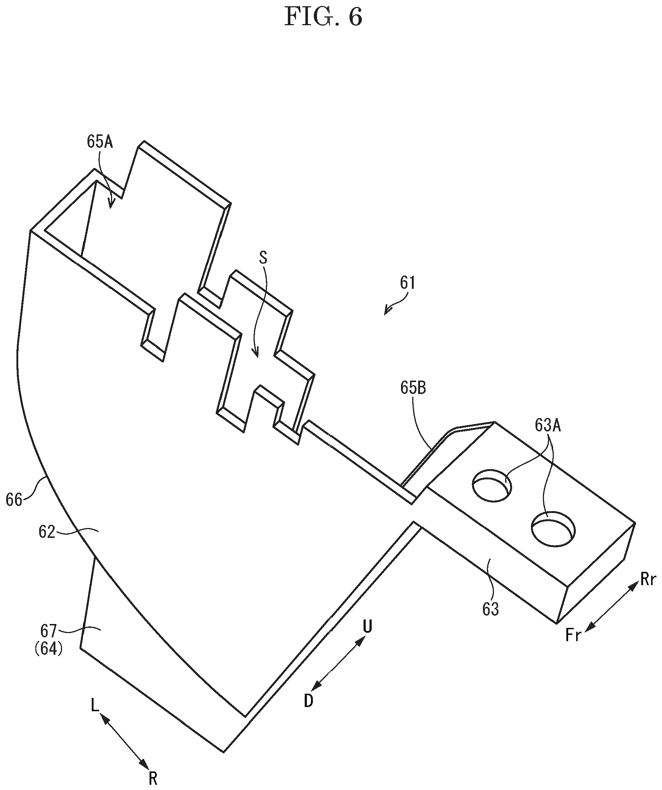

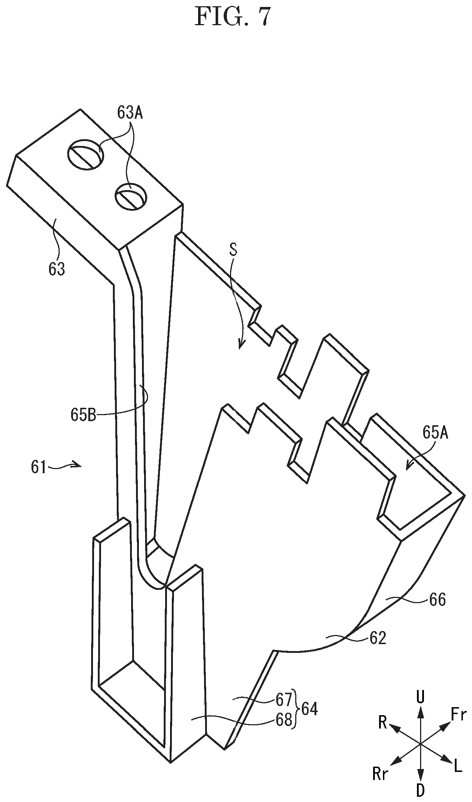

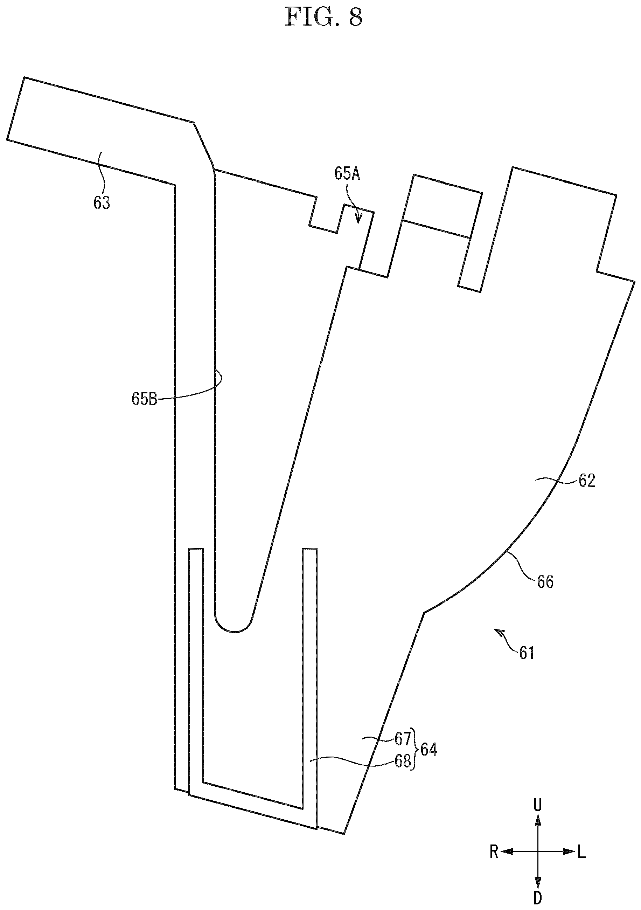

[Cable Treatment Member] With reference to FIG. 2 to FIG. 8, the cable treatment member 61 will be described. FIG. 4 is a rear view showing a part of the sheet feeding tray 34 arranged at an upper limit position. FIG. 5 is a rear view showing a part of the sheet feeding tray 34 arranged at a lower limit position. FIG. 6 is a perspective view showing the cable treatment member 61 (the front side). FIG. 7 is a perspective view showing the cable treatment member 61 (the rear side). FIG. 8 is a rear view showing the cable treatment member 61.

As shown in FIG. 2, the cable treatment member 61 is fixed to the rear lower surface of the sheet feeding tray 34, and hangs from the sheet feeding tray 34. The cable treatment member 61 is disposed along the rear support frame 40 and forms a part of the exterior covering the rear support frame 40. The sheet feeding tray 34 has a first opening 60A through which the cable 47 passes (see FIG. 3), and the support frame 40 has a second opening 60B through which the cable 47 passes (see FIG. 4 and FIG. 5).

As shown in FIG. 3 and FIG. 4, the three cables 47 extending from the three sensors 44 to 46 are bundled together, and the bundled cables 47 extend through the inside of the cable treatment member 61 to the electric board 48. In other words, the intermediate portion 47 A (a part) of the cable 47 (in the longitudinal direction) is housed inside the cable treatment member 61 (see FIG. 4 and FIG. 5). As shown in FIG. 4, the second opening 60B is displaced from the first opening 60A to the upstream side (rightward) in the conveyance direction of the document M on the sheet feeding tray 34, and is disposed above the second opening 60B in a state where the sheet feeding tray 34 is lifted to its highest position.

As shown in FIG. 6 to FIG. 8, the cable treatment member 61 has a housing part 62, a fixing part 63, and a reinforcing part 64, and is integrally molded of, for example, a synthetic resin material.

<Housing Part> The housing part 62 is formed in a hollow box shape with a first cable treatment opening 65A opened on the entire upper surface. A housing chamber S capable of housing the cable 47 in a bent state is formed in the housing part 62. A plurality of convex portions and concave portions is formed on the upper portion of the housing part 62 (the edge of the first cable treatment opening 65A), and a plurality of convex portions and concave portions (not shown) is also formed on the lower surface of the sheet feeding tray 34 so as to be engaged with the convex portions and the concave portions of the housing part 62. In a state in which the convex portions and concave portions of the housing part 62 are engaged with the convex portions and concave portions of the sheet feeding tray 34 (a state in which the cable treatment member 61 is attached to the sheet feeding tray 34), the first cable treatment opening 65A of the housing part 62 communicates (matches) with the first opening 60A of the sheet feeding tray 34 (see FIG. 4 and FIG. 5). More specifically, the first opening 60A faces the left side of the first cable treatment opening 65A (the conveyance direction side of the document M) (see FIG. 3 to FIG. 5).

A second cable treatment opening 65B is opened on the right portion of the rear surface of the housing part 62. The second cable treatment opening 65B is formed in a groove shape cut downward from an upper end of the rear surface of the housing part 62. The upper end of the second cable treatment opening 65B is continuous to the first cable treatment opening 65A. The second cable treatment opening 65B is formed long in the lifting and lowering direction of the cable treatment member 61 (the sheet feeding tray 34). More specifically, the second cable treatment opening 65B is formed in a substantially triangular shape (substantially trapezoidal shape) that gradually narrows in the left-and-right direction (an X-axis direction along the conveyance direction of the document M) from the upper end toward the lower end. With the cable treatment member 61 attached to the sheet feeding tray 34, the second cable treatment opening 65B of the housing part 62 communicates with (corresponds to) the second opening 60B of the support frame 40 (see FIG. 4 and FIG. 5). When the sheet feeding tray 34 is in the upper limit position (the most lifted state) (see FIG. 4), the second opening 60B faces the vicinity of the lower end of the second cable treatment opening 65B, and when the sheet feeding tray 34 is in the lower limit position (the most lowered state) (see FIG. 5), the second opening 60B faces the vicinity of the upper end of the second cable treatment opening 65B (more specifically, it is positioned above the second cable treatment opening 65B (the first cable treatment opening 65A)).

The intermediate portion 47A of the cable 47 is housed in the housing part 62 in a bent (curved) state (see FIG. 4 and FIG. 5). The housing part 62 is formed with a curved surface portion 66 that is bent so as to expand downward along the bend (curve) of the intermediate portion 47A of the cable 47. Specifically, the curved surface portion 66 constitutes the left side surface and the bottom surface of the housing part 62, and is bent rightward in an arc from the upper end to the lower end. In other words, the curved surface portion 66 is formed so as to connect the first opening 60A and the second opening 60B in a state where the sheet feeding tray 34 is lifted to the highest position (disposed at the upper limit position) (see FIG. 4). Since a bend is formed in the intermediate portion 47A of the cable 47, the length of the intermediate portion 47A of the cable 47 is longer than the length of a straight line connecting the first opening 60A and the second opening 60B.

<Fixing Part> The fixing part 63 extends rightward from the upper end of the housing part 62. A plurality (for example, two) of through-holes 63A are opened in the fixing part 63. The upper surface of the fixing part 63 is brought into contact with the lower surface of the sheet feeding tray 34 in a state where the convex portions and concave portions the housing part 62 are engaged with the concave portions and convex portions of the sheet feeding tray 34. The cable treatment member 61 is fixed to the sheet feeding tray 34 by, for example, passing a screw (not shown) through one of the two through-holes 63A and screwing into a screw hole 34A (see FIG. 3) formed in the sheet feeding tray 34.

<Reinforcing Part> The reinforcing part 64 has a reinforcing plate 67 and a reinforcing rib 68, and is connected to the lower portion of the housing part 62. The reinforcing plate 67 extends downwardly from the lower rear surface of the housing part 62, and forms the same plane as the rear surface of the housing part 62. The reinforcing rib 68 is formed in a substantially U-shape when viewed from the rear surface, and projects rearward from the rear surface of the reinforcing plate 67. More specifically, the reinforcing rib 68 is formed from the rear surface of the reinforcing plate 67 to the rear surface of the housing part 62, and the lower portion of the second cable treatment opening 65B enters the inside of the U-shaped reinforcing rib 68. With the cable treatment member 61 attached to the sheet feeding tray 34, the reinforcing ribs 68 abut against the rear support frame 40, and form a gap (not shown) between the rear surface (the second cable treatment opening 65B) of the housing part 62 and the front surface of the support frame 40.

[Operation of Cable Treatment Member] The operation of the cable treatment member 61 will be described with reference to FIG. 4 and FIG. 5. The initial state is a state in which the sheet feeding tray 34 is disposed at the upper limit position (see FIG. 4).

The three cables 47 extend from the three sensors 44 to 46 toward the first opening 60A formed in the rear portion of the sheet feeding tray 34, and are bundled together near the first opening 60A (see FIG. 3). As shown in FIG. 4, the cable 47 bundled together passes through the first opening 60A and the first cable treatment opening 65A, and enters the housing chamber S of the housing part 62. The intermediate portion 47A of the cable 47 entering the housing chamber S extends from the first opening 60A (the first cable treatment opening 65A) toward the second opening 60B (downward) while forming a bend along the curved surface portion 66. It should be noted that the cable 47 (the intermediate portion 47A) along the curved surface portion 66 means that the cable 47 is separated from the curved surface portion 66 but is curved (deflected) in the same manner as the curved surface portion 66 as shown in FIG. 4, and also means that the cable 47 comes into contact with the curved surface portion 66 and is curved (deflected) with substantially the same curvature as the curved surface portion 66 (not shown).

The cable 47 extending downwardly along the curved surface portion 66 exits from the housing chamber S through the second cable treatment opening 65B and the second opening 60B. The cable 47 is exposed to the rear side of the support frame 40 through the second opening 60B, and is bent in, for example, an upwardly convex mountain shape, and the terminal end of the cable 47 is connected to the electric board 48. The cable 47 exposed to the rear side of the support frame 40 is supported by the support frame 40 via a cable tie T (binding band) near the upper portion of the mountain shape. The cable tie T does not fasten the cable 47, and the movement of the cable 47 is allowed.

As described above, the cable 47 electrically connects the sensors 44 to 46 provided on the sheet feeding tray 34 and the electric board 48 provided on the support frame 40. The intermediate portion 47A of the cable 47 is curved along the substantially entire area of the curved surface portion 66 and is bent in a generally J-shape (U-shape).

Next, as shown in FIG. 5, when the sheet feeding tray 34 is lowered from the upper limit position to the lower limit position, the cable treatment member 61 fixed to the sheet feeding tray 34 is also lowered. Then, as the cable treatment member 61 is lowered, the cable 47 near the lower portion of the curved surface portion 66 (near the second opening portion 60B) is relatively pulled up. On the other hand, the cable 47 in the upper portion (near the first opening portion 60A) of the curved surface portion 66 is maintained in a curved (bent) state along the curved surface portion 66. When the sheet feeding tray 34 at the lower limit position is lifted, as the cable treatment member is lifted, the cable 47 near the second opening 60B is relatively pushed down and curved along the curved surface portion 66. The cable 47 in the upper portion of the curved surface portion 66 remains curved along the curved surface portion 66.

As described above, the intermediate portion 47A of the cable 47 is maintained in a bent state inside the cable treatment member 61 that is lifted and lowered together with the sheet feeding tray 34.

In the document conveying device 16 according to the present embodiment described above, the cable treatment member 61 is hanged from the sheet feeding tray 34 which is lifted and lowered, and the intermediate portion 47A of the cable 47 is housed in the cable treatment member 61 in a bent state. With this configuration, the bending or twisting of the cable 47 caused by the lifting and lowering of the sheet feeding tray 34 (the cable treatment member 61) can be absorbed by the bending of the intermediate portion 47A of the cable 47 housed in the cable treatment member 61. The cable treatment member 61 is formed with the curved surface portion 66 projecting downward. According to this configuration, even if the intermediate portion 47A of the cable 47 moves inside the cable treatment member 61 with the lifting and lowering of the sheet feeding tray 34, the cable 47 can be bent along the curved surface portion 66. Thus, the stress applied to the cable 47 in accordance with the lifting and lowering of the sheet feeding tray 34 can be reduced, and problems such as disconnection of the cable 47 can be suppressed.

In the document conveying device 16 according to the present embodiment, when the sheet feeding tray 34 is positioned at the upper limit position, the curved surface portion 66 is curved to connect the first opening 60A and the second opening 60B. According to this configuration, when the sheet feeding tray 34 is arranged at the upper limit position, substantially the entire cable 47 in the cable treatment member 61 can be along the curved surface portion 66 (see FIG. 4). When the sheet feeding tray 34 is lowered from the upper limit position, the cable 47 near the second opening 60B (the second cable treatment opening 65B) starts to separate from the curved surface portion 66, but the cable 47 near the first opening 60A (the first cable treatment opening 65A) continues to be along the curved surface portion 66 (see FIG. 5). Thus, the bend (curve) of the cable 47 can be maintained inside the cable treatment member 61, and the stress on the cable 47 at the time of lifting and lowering the sheet feeding tray 34 can be effectively reduced.

In the document conveying device 16 according to the present embodiment, the second cable treatment opening 65B is formed long in the lifting and lowering direction of the cable treatment member 61. According to this configuration, even if the cable treatment member 61 is lifted and lowered together with the sheet feeding tray 34, the cable 47 can move in the lifting and lowering direction relatively in the second cable treatment opening 65B. This prevents the cable 47 passing through the second cable treatment opening 65B from being strongly pressed against the peripheral edge of the second opening 60B, thereby preventing the disconnection of the cable 47.

In the document conveying device 16 according to the present embodiment, the lifting part 37 is a mechanism including the lifting rack 55 and the lifting pinion 56, but the present disclosure is not limited thereto. For example, the lifting part 37 may be a mechanism including a pulley and a wire, or a mechanism including a piston and a cylinder (not shown).

In the document conveying device 16 according to the present embodiment, the second opening 60B of the support frame 40 is displaced rightward with respect to the first opening 60A of the sheet feeding tray 34, but the present disclosure is not limited to this. The second opening 60B may be displaced leftward with respect to the first opening 60A (not shown). In this case, the curved surface portion 66 of the cable treatment member 61 forms the right side surface and the bottom surface of the housing part 62, and is bent leftward in an arc from the upper end to the lower end (not shown).

Further, in the document conveying device 16 according to the present embodiment, the second cable treatment opening 65B of the cable treatment member 61 is formed in a long groove shape in the lifting and lowering direction (the upper-and-lower direction), but the present disclosure is not limited to this. The second cable treatment opening 65B may be formed so as not to interfere with the cable 47 moving with the lifting and lowering of the sheet feeding tray 34, and the shape and size thereof may be freely changed (not shown). The upper end of the second cable treatment opening 65B may not be connected to the first cable treatment opening 65A (not shown).

Further, in the description of the present embodiment, a case where the present disclosure is applied to the image forming apparatus 1 (multifunctional peripheral) is shown as an example, but the present disclosure is not limited to this, and the present disclosure may be applied to, for example, a copying machine, a facsimile machine, an image reading machine, or the like.

It should be noted that the description of the above embodiments shows one aspect of the document conveying apparatus, the image reading apparatus, and the image forming apparatus according to the present disclosure, and the technical scope of the present disclosure is not limited to the above embodiments. The present disclosure may be variously modified, substituted, or modified without departing from the scope of the appended claims.

## Claims

1. A document conveying device (16) which conveys a document placed on a feeding tray (34) to a discharge tray (35) disposed below the feeding tray (34), the document conveying device (16) comprising:
a support frame (40) which supports the feeding tray (34) to be liftable and lowerable;
a cable (47) which connects a first connecting portion (44) provided in the feeding tray (34) and a second connecting portion (48) provided in the support frame (40); **characterised in that** the document conveying device (14) further comprises
a cable treatment member (61) which is provided so as to be hanged from the feeding tray (34) and houses an intermediate portion of the cable (47) in a bent state, wherein
the intermediate portion of the cable (47) is kept in the bent state inside the cable treatment member (61) when the feeding tray (34) is lifted and lowered, and
the cable treatment member (61) has a curved surface portion (66) curved so as to expand downward along the bend of the cable (47).

2. The document conveying device (16) according to claim 1, wherein
the feeding tray (34) has a first opening (60A) through which the cable (47) passes,
the support frame (40) has a second opening (60B) through which the cable (47) passes,
the cable treatment member (61) has a first cable treatment opening (65A) communicating with the first opening (60A) and a second cable treatment opening (65B) communicating with the second opening (60B),
the second opening (60B) is displaced from the first opening (60A) in one of the X-axis directions along a conveyance direction of the document, and is disposed below the first opening (60A) in a state in which the feeding tray (34) is lifted most, and
the curved surface portion (66) is formed so as to connect the first opening (60A) and the second opening (60B) in the state in which the feeding tray (34) is lifted most.

3. The document conveying device (16) according to claim 2, wherein
the second cable treatment opening (65B) is formed to be long in a lifting and lowering direction of the cable treatment member (61).

4. An image reading device (1B) comprising:
the document conveying device (16) according to claim 1; and
a reading part (15) which reads an image of the document conveyed by the document conveying device (16).

5. An image forming apparatus (1) comprising the image reading device (1B) according to claim 4.

## Patentansprüche

1. Dokumentenfördervorrichtung (16), die ein auf einem Zuführfach (34) angeordnetes Dokument zu einem unterhalb des Zuführfachs (34) angeordneten Ausgabefach (35) fördert, wobei die Dokumentenfördervorrichtung (16) umfasst:
einen Stützrahmen (40), der das Zuführfach (34) so stützt, dass es angehoben und abgesenkt werden kann;
ein Kabel (47), das einen ersten Verbindungsabschnitt (44), der in dem Zuführfach (34) vorgesehen ist, und einen zweiten Verbindungsabschnitt (48), der in dem Stützrahmen (40) vorgesehen ist, verbindet;
**dadurch gekennzeichnet, dass**
die Dokumentenfördervorrichtung (14) ferner umfasst
ein Kabelführungselement (61), das so vorgesehen ist, dass es an dem Zuführfach (34) aufgehängt ist und einen Zwischenabschnitt des Kabels (47) in einem gebogenen Zustand aufnimmt, wobei
der Zwischenabschnitt des Kabels (47) in dem gebogenen Zustand in dem Kabelführungselement (61) gehalten wird, wenn das Zuführfach (34) angehoben und abgesenkt wird, und
das Kabelführungselement (61) einen gekrümmten Oberflächenabschnitt (66) aufweist, der so gekrümmt ist, dass er sich entlang der Biegung des Kabels (47) nach unten ausdehnt.

2. Dokumentenfördervorrichtung (16) nach Anspruch 1, wobei
das Zuführfach (34) eine erste Öffnung (60A) aufweist, durch die das Kabel (47) geführt ist,
der Stützrahmen (40) eine zweite Öffnung (60B) aufweist, durch die das Kabel (47) geführt ist,
das Kabelführungselement (61) eine erste Kabelführungsöffnung (65A), die mit der ersten Öffnung (60A) in Verbindung steht, und eine zweite Kabelführungsöffnung (65B) aufweist, die mit der zweiten Öffnung (60B) in Verbindung steht,
die zweite Öffnung (60B) von der ersten Öffnung (60A) in einer der X-Achsenrichtungen entlang einer Förderrichtung des Dokuments versetzt und unterhalb der ersten Öffnung (60A) in dem Zustand, in dem das Zuführfach (34) am weitesten angehoben ist, angeordnet ist, und
der gekrümmte Oberflächenabschnitt (66) so ausgebildet ist, dass er die erste Öffnung (60A) und die zweite Öffnung (60B) in dem Zustand verbindet, in dem das Zuführfach (34) am weitesten angehoben ist.

3. Dokumentenfördervorrichtung (16) nach Anspruch 2, wobei
die zweite Kabelführungsöffnung (65B) so ausgebildet ist, dass sie in einer Anhebe- und Absenkrichtung des Kabelführungselements (61) länglich ausgebildet ist.

4. Bildlesevorrichtung (1B), umfassend:
die Dokumentenfördervorrichtung (16) nach Anspruch 1; und
einen Leseteil (15), das ein Bild des von der Dokumentenfördervorrichtung (16) geförderten Dokuments liest.

5. Bilderzeugungsgerät (1), umfassend die Bildlesevorrichtung (1B) nach Anspruch 4.

## Revendications

1. Un dispositif (16) de transport de documents qui transporte un document placé sur un bac d'alimentation (34) vers un bac de déchargement (35) disposé sous le bac d'alimentation (34), le dispositif (16) de transport de documents comprenant :
un châssis de support (40), qui supporte le bac d'alimentation (34) de manière qu'il puisse être levé et abaissé ;
un câble (47), qui connecte une première partie de connexion (44) prévue dans le bac d'alimentation (34) et une deuxième partie de connexion prévue dans le châssis de support (40) ;
**caractérisé en ce que** le dispositif de transport de documents (14) comprend en outre un élément (61) de traitement de câble qui est prévu de manière à être suspendu au bac d'alimentation (34) et qui loge une partie intermédiaire du câble (47) dans un état courbé,
la partie intermédiaire du câble (47) étant maintenue dans l'état courbé à l'intérieur de l'élément (61) de traitement de câble lorsque le bac d'alimentation (34) est levé et abaissé, et
l'élément (61) de traitement de câble présentant une partie de surface courbée (66), qui est courbée de manière à s'étendre vers le bas le long de la courbure du câble (47).

2. Le dispositif (16) de transport de documents selon la revendication 1, dans lequel
le bac d'alimentation (34) présente une première ouverture (60A) à travers laquelle passe le câble (47),
le châssis de support (40) présente une deuxième ouverture (60B) à travers laquelle passe le câble (47),
l'élément (61) de traitement de câble présente une première ouverture (65A) de traitement de câble communiquant avec la première ouverture (60A) et une deuxième ouverture (65B) de traitement de câble communiquant avec la deuxième ouverture (60B),
la deuxième ouverture (60B) est décalée par rapport à la première (60A) dans l'une des directions de l'axe X le long d'une direction de transport du document, et est agencée en dessous de la première ouverture (60A) dans un état dans lequel le bac d'alimentation (34) est le plus relevé, et
la partie de surface courbe (66) est formée de manière à relier la première ouverture (60A) et la deuxième ouverture (60B) dans l'état dans lequel le bac d'alimentation (34) est le plus relevé.

3. Le dispositif (16) de transport de documents selon la revendication 2, dans lequel
la deuxième ouverture (65B) de traitement de câble est formée de manière à être longue dans une direction de levage et d'abaissement de l'élément (61) de traitement de câble.

4. Un dispositif de lecture d'images (1B) comprenant :
le dispositif (16) de transport de documents selon la revendication 1 ; et
une partie de lecture (15) qui lit une image du document transporté par le dispositif (16) de transport de documents.

5. Un appareil (1) de formation d'images, comprenant le dispositif de lecture d'images (1B) selon la revendication 4.
